(19) Europäisches Patentamt
European Patent Office
Office européen des brevets

(11) EP 0 093 310 B2

(12) NEUE EUROPÄISCHE PATENTSCHRIFT

(45) Veröffentlichungstag und Bekanntmachung des Hinweises auf die Entscheidung über den Einspruch:
**28.01.1998 Patentblatt 1998/05**

(45) Hinweis auf die Patenterteilung:
**12.08.1987 Patentblatt 1987/33**

(21) Anmeldenummer: **83103768.4**

(22) Anmeldetag: **19.04.1983**

(51) Int Cl.[6]: **C08G 77/06**, C08L 83/04

# (54) Verfahren zur Herstellung von feinteiligen, stabilen O/W-Emulsionen von Organopolysiloxanen

Process for preparing particulate stable oil-in-water emulsions of organopolysiloxanes

Procédé pour préparer des émulsions huile/eau stables à particules fines d'organopolysiloxanes

(84) Benannte Vertragsstaaten:
**BE DE FR GB IT NL**

(30) Priorität: **04.05.1982 DE 3216585**

(43) Veröffentlichungstag der Anmeldung:
**09.11.1983 Patentblatt 1983/45**

(73) Patentinhaber: **Th. Goldschmidt AG**
**45127 Essen (DE)**

(72) Erfinder:
- **Koerner, Götz, Dr.**
  **D-4300 Essen (DE)**
- **Nickel, Friedhelm**
  **D-4300 Essen 1 (DE)**
- **Rott, Hans, Dr.**
  **D-4300 Essen 16 (DE)**
- **Schmidt, Günter, Dr.**
  **D-4300 Essen (DE)**

(56) Entgegenhaltungen:
**DE-A- 2 555 048**
**DE-B- 1 570 451**
**US-A- 3 294 725**
**DE-B- 1 495 512**
**DE-C- 3 024 870**

Bemerkungen:
Die Akte enthält technische Angaben, die nach dem Eingang der Anmeldung eingereicht wurden und die nicht in dieser Patentschrift enthalten sind.

EP 0 093 310 B2

## Beschreibung

Die Erfindung betrifft ein Verfahren zur Herstellung von feinteiligen, stabilen O/W-Emulsionen von Organopolysiloxanen durch Kondensation von niedrigmolekularen siliciumorganischen Verbindungen in feinteiliger Form in Gegenwart von Emulgatoren und Kondensationskatalysatoren, wobei man zunächst die zum Erhalt einer stabilen Emulsion benötigte Menge Emulgator in, bezogen auf das Gewicht des Emulgators, der 0,5- bis 3fachen Gewichtsmenge Wasser verteilt, dann in diese Verteilung die zu emulgierende Menge der siliciumorganischen Verbindung einträgt und unter Einwirkung hoher Scherkräfte bis zur Bildung einer gleichmäßigen, transparenten bis schwach opaken Paste homogenisiert.

Emulsionen von Organopolysiloxanen in Wasser kann man dadurch herstellen, daß man Organopolysiloxane des gewünschten chemischen Aufbaus und der erforderlichen Viskosität mit Hilfe von Emulgatoren in Wasser emulgiert. Diese Methode läßt sich insbesondere bei niedrigviskosen Organopolysiloxanen anwenden. Es bereitet jedoch erhebliche Schwierigkeiten, Siloxane höheren Molekulargewichtes und damit höherer Viskosität in Emulsionsform überzuführen.

Die bevorzugte Methode des Standes der Technik zur Herstellung von feinteiligen, stabilen O/W-Emulsionen von Organopolysiloxanen besteht deshalb darin, daß man niedrigmolekulare siliciumorganische Verbindungen in Emulsionsform überführt und die Kondensation und/oder Polymerisation der siliciumorganischen Verbindungen in der dispersen Phase der Emulsion durchführt.

So ist z.B. in der DE-AS 14 95 512 ein Verfahren zur Herstellung von stabilen Organopolysiloxanemulsionen durch Polymerisation und/oder Mischpolymerisation von gegebenenfalls in situ hergestellten Organopolysiloxanen beschrieben, die im wesentlichen aus Einheiten der all-

$$R_nSiO_{\frac{4-n}{2}} \qquad (I)$$

aufgebaut sind (R = Wasserstoff oder einwertige, gegebenenfalls halogenierte Kohlenwasserstoffreste; n = Durchschnittswert von 1 bis weniger als 3) und/oder Silcarbanen der allgemeinen Formel

$$HO(R)_2SiQSi(R)_2OH \qquad (II)$$

(Q = zweiwertiger/ gegebenenfalls durch Ethersauerstoffatome unterbrochener Kohlenwasserstoffrest mit weniger als 15 C-Atomen der mit den Si-Atomen über Si-C-Bindungen verknüpft ist) oder Diphenylsilandiol in wäßrigem Medium in feinverteilter Form und in Gegenwart von Katalysatoren. Dieses Verfahren ist dadurch gekennzeichnet, daß man als Katalysatoren Sulfonsäuren der allgemeinen Formel

$$R'C_6H_4SO_3H \qquad (III)$$

(R' = einwertiger Kohlenwasserstoffrest mit mindestens 6 C-Atomen) verwendet.

Aus der DE-AS 1570 451 ist ein Verfahren zur Herstellung von stabilen Organopolysiloxanemulsionen durch polymerisation und/oder Mischpolymerisation von Organosiloxanen aus Einheiten der allgemeinen Formel

$$R_nSiO_{\frac{4-n}{2}} \qquad (I)$$

und/oder Silcarbanen der allgemeinen Formel

$$HO(R)_2SiQSi(R)_2OH \qquad (II)$$

(R = Wasserstoffatome oder einwertige, gegebenenfalls halogenierte Kohlenwasserstoffreste: Q = zweiwertige, mit den Si-Atomen über C-Atome verknüpfte Kohlenwasserstoffreste mit weniger als 15 C-Atomen, die gegebenenfalls durch Ethersauerstoffatome unterbrochen sein können; n = 0, 1, 2 oder 3, oder ein Durchschnittswert zwischen 1 und 3) in wäßrigem Medium in feinverteilter Form und in Gegenwart von Katalysatoren bekannt, bei

dem man als Katalysatoren Alkylhydrogensulfate der allgemeinen Formel

$$R'OSO_2OH \qquad (III)$$

(R' = einwertiger, aliphatischer Kohlenwasserstoffrest mit mindestens 6 C-Atomen) verwendet. In dieser Auslegeschrift wird darauf hingewiesen, daß die Bildung einer Voremulsion der Organosiliciumverbindungen für das dort beanspruchte Verfahren nicht wesentlich sei, da Emulgierung und Polymerisation praktisch gleichzeitig verlaufen würden.

In der Praxis hat sich für die Herstellung von feinteiligen O/W-Emulsionen von Organopolysiloxanen die Kondensation von niedrigmolekularen siliciumorganischen Ausgangsverbindungen in Emulsionsform durchgesetzt. Ein großer Nachteil dieses Verfahrens besteht jedoch darin, daß die Kondensation in Gegenwart großer Mengen Wasser durchgeführt werden muß und deshalb die Verwendung entsprechend großer Rührvorrichtungen erforderlich ist. Außerdem erfordert die Einstellung des gewünschten Molekulargewichtes, insbesondere bei Kondensationsreaktionen, relativ lange Zeiten, so daß die Raum/Zeit-Ausbeute solcher Verfahren unbefriedigend ist.

Der vorliegenden Erfindung liegt die Aufgabe zugrunde, ein Verfahren zu finden, welches es ermöglicht, die Kondensation vor der Bildung der Emulsion durchzuführen, dabei außerdem die Zeit bis zur Erreichung des gewünschten Molekulargewichtes abzukürzen.

Überraschenderweise gelingt dies erfindungsgemäß dadurch, daß man einen grenzflächenaktiven Katalysator in Mengen von 0,5 bis 5 Gew.-%, bezogen auf siliciumorganische Verbindungen, in einer der obengenannten Verfahrensstufen zusetzt, nach Erreichen des gewünschten Molekulargewichts die erhaltene Paste mit dem restlichen Wasser in an sich bekannter Weise scherkraftarm zu einer Emulsion verrührt und dann den Katalysator durch Neutralisieren desaktiviert.

Das Wesen der Erfindung besteht somit darin, daß man aus der benötigten Menge Emulgator, relativ kleinen Mengen Wasser und der Gesamtmenge der siliciumorganischen Ausgangsverbindungen eine gleichmäßige, transparente bis schwach opake Paste herstellt und die Kondensation in dieser gelartigen Paste in Gegenwart von Katalysatoren ablaufen läßt. Erst nach Erhalt des gewünschten Molekulargewichtes, d.h. nach Ablauf der Kondensationsreaktion, wird der Katalysator durch Neutralisation desaktiviert und die gewünschte verdünnte Emulsion durch scherkraftarmes Verdünnen der Paste bereitet.

Zunächst wird somit die gesamte Menge Emulgator, die man letztlich zur Bildung der stabilen O/W-Emulsion benötigt, in der 0,5- bis 3fachen Gewichtsmenge Wasser verteilt. Als Emulgatoren sind die aus dem Stand der Technik bekannten nichtionogenen, anionaktiven, kationaktiven oder amphotensidischen Emulgatoren brauchbar.

Beispiele für nichtionogene Emulgatoren sind die Anlagerungsprodukte von Ethylenoxid an Verbindungen mit azidem Wasserstoff, wie Fettalkohole, Alkylphenole oder Alkohole der Oxosynthese. Der HLB-Wert der Emulgatoren ist so auszuwählen, daß er in dem Bereich liegt, in dem die Bildung von O/W-Emulsionen begünstigt wird. Im allgemeinen werden Emulgatoren eines HLB-Wertes von $\geq 10$ verwendet. Geeignete nichtionogene Emulgatoren sind z.B. die Anlagerungsprodukte von Ethylenoxid an Nonylphenol oder i-Tridecylalkohol, wobei insbesondere 10 bis 15 Mol Ethylenoxid angelagert sind.

Als anionaktive Emulgatoren können die Alkalisalze von Fettsäuren oder die Alkali-, Erdalkali- oder Aminsalze von organischen Sulfonsäuren, insbesondere Alkylarylsulfonsäuren, verwendet werden. Beispiele solcher Emulgatoren sind das Natriumsalz der Dodecylbenzolsulfonsäure oder der Laurylschwefelsäure.

Als kationaktive Emulgatoren können quarternäre Ammoniumverbindungen, wie z. B Didecyldimethylammoniumchlorid, Stearyldimethylbenzylammoniumchlorid, verwendet werden.

Als amphotensidische Emulgatoren können z.B. Betaine der allgemeinen Formel

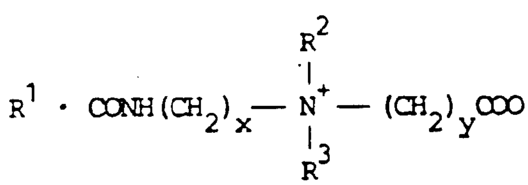

verwendet werden, worin $R^1$ der Alkylrest einer Fettsäure mit 10 bis 18 Kohlenstoffatomen ist, $R^2$ und $R^3$ gleich oder verschioden sind und einen Alkyl- oder Hydroxyalkylrest mit 1 bis 4 Kohlenstoffatomen bedeuten, x = 2 oder 3 und y = 1, 2, 3 oder 4 ist.

Beispiele solcher Betaine sind Lauroylamidopropyl-N-dimethylaminoessigsäure und Stearoylamidopropyl-N-dimethylaminoessigsäure.

Es ist natürlich auch möglich, Mischungen von nichtionogenen Emulgatoren mit anionaktiven oder kationaktiven oder amphotensidischen Emulgatoren zu verwenden.

Als Katalysatoren werden in Übereinstimmung mit dem Stand der Technik Säuren oder Basen verwendet Als Säuren sind insbesondere solche Säuren geeignet, die grenzflächenaktiv sind. Beispiele solcher Katalysatoren sind Sulfonsäuren wie die Alkylsulfonsäuren oder Alkylarylsulfonsäuren, z. B. Dodecylbenzolsulfonsäure, ferner Schwefelsäurehalbester, z. B. Dodecylschwefelsäureester oder Phosphorsäurepartialester, z.B. Gemische aus Octyl- und Dioctylphosphorsäureester. Als Basen werden insbesondere grenzflächenaktive organische Ammoniumverbindungen, wie z.B. Didecyldimethylammoniumhydroxid oder Benzyltrimethylammoniumhydroxid, verwendet.

Wenn auch grundsätzlich die aus dem Stand der Technik bekannten Katalysatoren verwendet werden können, sind die grenzflächenaktiven Katalysatoren bevorzugt, da sie zumindest teilweise gleichzeitig die Funktion des Emulgators übernehmen können.

Man benötigt im allgemeinen 0,5 bis 5 Gew.-% Katalysatoren, bezogen auf siliciumorganische Ausgangsverbindungen. Die Katalysatoren werden beim erfindungsgemäßen Verfahren entweder am Anfang dem Wasser zugesetzt oder dann der Paste zugefügt.

Nach Erreichen des gewünschten Molekulargewichtes wird der Katalysator desaktiviert. Dies kann in einfacher Weise durch Neutralisieren geschehen.

Die Paste wird aus ihren Bestandteilen durch Einwirkung hoher Scherkräfte gebildet. Vorrichtungen, mit denen man hohe Scherkräfte erzielen kann, sind dem Fachmann bekannt. Es handelt sich dabei im allgemeinen um schnell laufende Rührer, bei denen das Rührorgan z.B. in Art einer Dissolverscheibe ausgebildet ist. Geeignet sind ferner Homogenisiervorrichtungen, die nach dem Rotor-Stator-Prinzip arbeiten.

Die erhaltenen Pasten sind transparent oder schwach opak. Sie haben gelartige Konsistenz. Es sind auch unter dem Mikroskop keine, die siliciumorganischen Ausgangsverbindungen enthaltenden Tröpfchen erkennbar, welche für O/W-Emulsionen charakteristisch sind.

Die Kondensation der niedrigmolekularen siliciumorganischen Verbindungen zu den gewünschten Organopolysiloxanen höheren Molekulargewichtes läuft in dieser Paste ab. Zur Erhöhung der Reaktionsgeschwindigkeit kann die Paste auf etwa 20 bis 80 °C erwärmt werden. Die Kondensationsreaktion ist innerhalb eines Zeitraumes von 30 Minuten bis 5 Stunden im wesentlichen abgeschlossen. Die Paste kann während dieser Zeit, insbesondere bei Anwendung höherer Temperaturen, gerührt werden.

Verwendet man als niedrigmolekulare siliciumorganische Verbindungen solche, welche an Silicium gebundene Alkoxygruppen enthalten, empfiehlt es sich, zur Vervollständigung der Reaktion und zur Erhöhung der Stabilität der später gebildeten Emulsionen, den bei der Reaktion freiwerdenden Alkohol aus der paste zu entfernen. Dies geschieht entweder durch Temperaturerhöhung oder durch Druckverminderung oder durch die Kombination beider Maßnahmen.

Nach Erreichen des gewünschten Molekulargewichtes wird der Katalysator in an sich bekannter Weise desaktiviert. Die paste wird nun mit dem restlichen Wasser unter Vermeidung hoher Scherkräfte verrührt, wobei eine sowohl feinteilige wie stabile O/W-Emulsion erhalten wird.

Um 100 Gew.-Teile Emulsion zu erhalten, wird man bei einer typischen Durchführung des erfindungsgemäßen Verfahrens etwa 1 bis 5 Gew.-Teile Emulgator in 0,5 bis 15 Gew.-Teilen Wasser verteilen und in diese Verteilung 20 bis 60 Gew.-Teile siliciumorganische Verbindung eintragen und bis zur Bildung einer transparenten paste homogenisieren. Die 1 bis 5 Gew.-Teile Emulgator enthalten 0,1 bis 3 Gew.-Teile grenzflächenaktiven Katalysator. Die erhaltene transparente paste wird nach Erreichen des gewünschten Molekulargewichtes des Organopolysiloxans und Neutralisieren des Katalysators mit Wasser auf 100 Gew.- Teile verdünnt.

Als siliciumorganische Ausgangsverbindungen kam man die aus dem Stand der Technik bekannten Verbindungen einsetzen. Hierzu gchören vor allem Polysiloxanole, insbesondere $\alpha,\omega$-Polysiloxandiole, eines Molekulargewichtes von etwa 2000 bis 5000 und einer Viskosität von 50 bis 150 cSt bei 25°C. Insbesondere bevorzugt sind die $\alpha,\omega$-Polydimethylsiloxandiole. Ferner sind als Ausgangsverbindungen Alkoxysilane oder Alkoxysiloxane brauchbar, wobei die Alkoxygruppe 1 bis 4 Kohlenstoffatome enthalten soll. Beispiele geeigneter Alkoxysilane sind Methyltriethoxysilan, 3-Aminopropyltriethoxysilan, 3-Mercaptopropyltrimethoxysilan oder Octyltriethoxysilan.

Für das erfindungsgemäße Verfahren sind ferner cyclische Organopolysiloxane, wie z. B. Octamethylcyclotetrasiloxan oder Decamethylcyclopentasiloxan, geeignet.

Es war überraschend, daß bei dem erfindungsgemäßen Verfahren die Kondensation der siliciumorganischen Ausgangsverbindungen mit erhöhter Geschwindigkeit abläuft und die die kondensierten Organopolysiloxane enthaltende Paste bereits durch mäßiges Rühren in eine stabile, sehr feinteilige O/W-Emulsion übergeführt werden kann. Es war außerdem überraschend, daß bei der transparenten Paste keine Änderung ihrer kolloidalen Struktur eintritt, obwohl in der siliciumorganischen Phase eine starke Änderung des Molgewichtes und damit eine drastische Verringerung der Zahl der Moleküle stattfindet.

In den folgenden Beispielen wird das erfindungsgemäße Verfahren näher erläutert und einigen Verfahren des

Standes der Technik, bei denen die Kondensation in Emulsionsform abläuft, gegenübergestellt.

Beispiel 1

In ein Emulgatorengemisch, bestehend aus 1 Gew.-Teil Natriumalkylphenolpolyoxyethylensulfat, 0, 25 Gew.-Teilen oxethyliertem Rizinusöl, 0,5 Gew.-Teilen Dodecylbenzolsulfonsäure und 2,0 Gew.-Teilen Wasser, wurden mittels einer Dissolverscheibe 35 Gew.-Teile eines $\alpha,\omega$-Polydimethylsiloxandiols einer Viskosität von 120 $mm^2/s/25$ °C eingetragen und bis zur Bildung einer transparenten Paste homogenisiert.

Die Paste wurde anschließend 18 Stunden bei Raumtemperatur stehengelassen und dann mit 61,25 Gew.-Teilen Wasser verdünnt.

Nach der Neutralisation mit Triethanolamin wurde das Polysiloxan aus der feinteiligen, stabilen O/W-Emulsion isoliert und die Viskosität gemessen.

Es wurde ein Wert von 560.000 $mm^2/s/25$ °C ermittelt.

Vergleichsbeispiel a)

(DE-AS 14 95 512, Beispiel 12)

Eine Mischung aus 30 % eines in den endständigen Einheiten Hydroxylgruppen aufweisenden Dimethylpolysiloxans einer Viskosität von 70 $mm^2/s/$ 25°C, 2 % eines nichtionogenen Emulgiermittels (hergestellt aus 1 Mol Tridecanol und etwa 10 Mol Ethylenoxid) und 68 % Wasser warde durch Homogenisieren bei einem Druck von 281 $kg/cm^{-2}$ (276 bar) emulgiert.

Diese Emulsion warde mit 0,5 % Dodecylbenzolsulfonsäure versetzt. Die Emulsion wurde anschließend bei Raumtemperatur (annähernd 25°C) stehengelassen und proben zu den in der Tabelle angegebenen Zeiten genommen.

Nach Neutralisation mit Natriumcarbonat wurden die Polysiloxane isoliert und die Viskosität gemessen.

| Zeit | Viskosität in $mm^2/s/25$°C |
|---|---|
| 2 Tage | 90.319 |
| 5 Tage | 123.300 |
| 8 Tage | 304.000 |

**Beispiel 2**

Eine gemäß Beispiel 1 gebildete Paste wurde nach dem Homogenisieren unter Rühren auf 60°C erwärmt. Nach einem Zeitraum von 2 Stunden wurde die Paste mit dem Wasser scherkraftarm zu einer feinteiligen, stabilen O/W-Emulsion verdünnt.

Der in der Emulsion enthaltene saure Katalysator wurde durch einen Zusatz von Triethanolamin neutralisiert.

Die Emulsion wurde durch Zusatz von Ethanol gebrochen.

Das so isolierte Polysiloxan hatte eine Viskosität von 115.000 $mm^2s/s/$ 25°C Der Gehalt an cyclischen Siloxanen betrug < 0,1 %.

Vergleichsbeispiel b)

(DE-AS 14 95 512, Beispiel 6)

Eine Mischung aus 560 g cyclischem Dimethylsiloxan, 8 g Dodecylbenzolsulfonsäure und 1032 g Wasser wurden bei einem Druck von 281 $kg/cm^2$ (276bar) homogenisiert.

Teilmengen wurden 24 Stunden auf unterschiedliche Temperaturen erhitzt und anschließend mit Natriumcarbonat neutralisiert, bis ein pH-Wert von etwa 7 erreicht war.

Die Viskositäten der einzelnen Polysiloxane und deren Prozentgehalt an cyclischen Bestandteilen wurden bestimmt.

| Temperatur in °C | Viskosität $mm^2/s/25$°C | % cycl. Produkt |
|---|---|---|
| 50 | 120.000 | 10.1 |
| 70 | 23.200 | 10.1 |

Aus den Beispielen 1 und 2 sowie diesem Vergleichbeispiel ist zu erschen, daß das erfindungsgemäße Verfahren wesentlich schneller abläuft und kaum zur Bildung von anwendungstechnisch wertlosen Cyclen führt.

**Beispiel 3**

In ein Emulgatorengemisch, bestehend aus 0,36 Gew.-Teilen Didecyldimethylammoniumchlorid, 0,24 Gew- Teilen Dialkyldimethylammoniumchlorid (Alkylrest abgeleitet von hydriertem Talg), 0,9 Gew.-Teilen ethoxyliertem i-Tridecylalkohol und 3,0 Gew.-Teilen Wasser, wurden mittels einer Dissolverscheibe zunächst 45 Gew.-Teile eines α,ω-Polydimethylsiloxandiols einer Viskosität von 120 mm2/s/25°C und dam 2 Gew.-Teile einer In Kalilauge eingetragen und bis zur Bildung einer gelartigen, transparenten Paste unter Einwirkung hoher Scherkräfte homogenisiert.

Auschließend wurde die Paste unter weiterem Rühren auf 60°C erwärmt und nach einer Kondensatiönszeit von 3 Stunden mit 50,5 Gew.-Teilen Wasser zu einer stabilen Emulsion verdünnt.

Nach dem Neutralisieren mit Essigsäure warde die Emulsion durch Zusatz von Ethanol gebrochen. Das isolierte Polysiloxan hatte eine Viskosität von 84.000 $mm^2/s/25°C$.

**Beispiel 4**

In ein Emulgatorengemisch, bestehend aus 0,5 Gew.-Teilen Didecyldimethylammoniumchlorid, 1 Gew. -Teil Lauroylamidopropyl-N-dimethylaminoessigsäure, 2 Gew.-Teilen oxethyliertem i-Tridecylalkohol und 4,5 Gew.- Teilen Wasser, wurde mittels einer Dissolverscheibe zunächst ein Genisch aus 45 Gew.-Teilen eines α,ω-Polydimethylsiloxandiols einer Viskosität von 120 $mm^2/s/25°C$ und 3,1 Gew.-Teilen 3-Aminopropyltriethoxysilan und dann 2 Gew.-Teile einer In Kalilauge eingetragen und bis zur Bildung einer transparenten Paste homogenisiert.

Die Paste wurde dann im Vakuum unter Rühren 30 Minuten auf 35°C erwärmt und anschließend mit 47 Gew.-Teilen Wasser zu einer feinteiligen Emulsion verdünnt.

Nach dem Neutralisieren mit Essigsäure wurde das Polysiloxan durch Brechen der Emulsion isoliert.

Es zeigte sich ein gelartiger Rückstand, dar beim Stehenlassen zu einem gummiartigen Produkt weiterkondensierte.

**Beispiel 5**

In ein Emulgatorgemisch, bestehend aus 2,5 Gew.-Teilen oxethyliertem Nonylphenol, 0, 3 Gew. -Teilen Tetrabutylammoniumhydrogensulfat und 3,5 Gew.-Teilen einer 2-molaren Natronlauge, würden mittels einer Dissolverscheibe zunächst 40 Gew.-Teile eines Ethoxygruppen enthaltenden verzweigten Methylpolysiloxans mit einem Ethoxygehalt von 20 %, welches durch Hydrolyse von Methyltrichlorsilan in einem Wasser/ Ethanol-Gemisch in bekannter Weise herstellbar ist, eingetragen und bis zur Bildung einer transparenten Paste homogenisiert.

Die Paste wurde dam unter Rühren 30 Minuten auf 25-C erwärmt und anschließend mit 53,7 Gew.-Teilen Wasser zu einer feinteiligen, stabilen Emulsion verdünnt.

Nach dem Neutralisieren mit Essigsäure warde das Polysiloxan durch Brechen der Emulsion isoliert.

Das freigesetzte Polysiloxan war von gelartiger Konsistenz, das beim Stehenlassen an der Luft zu einem harzartigen Produkt weiterkondensierte.

**Beispiel 6**

In ein Emulgatorgemisch, bestehend aus 1 Gew.-Teil oxethylierten Nonylphenol, 1 Gew.-Teil eines oxethylierten Triglycerids, 0,3 Gew.-Teilen Tetrabutylammoniumhydrogensulfat und 3 Gew.-Teilen einer 2-molaren Natronlauge, wurde mittels einer Dissolverscheibe eine Mischung aus 20 Gew.-Teilen des verzweigten Methylpolysiloxans aus Beispiel 5 und 20 Gew.-Teilen eines verzweigten Ethoxygruppen enthaltenden Phenylmethylpolysiloxans mit einem Ethoxygehalt von 13 %, welches aus 7 Gew.-Teilen Phenyltrichlorsilan, 0,5 Gew.-Teilen Dimethyldichlorsilan und 7 Gew.-Teilen Methyltrichlorsilan durch Hydrolyse in einem Wasser/Ethanol-Gemisch in bekannter Weise hergestellt wurde, eingetragen und bis zur Bildung einer gelartigen, transparenten Paste unter Einwirkung hoher Scherkräfte homogenisiert.

Anschließend wurde die Paste unter weiterem Rühren auf 30°C erwärmt und nach einer Kondensationszeit von 2 Stunden mit 54,7 Gew.-Teilen Wasser zu einer stabilen Emulsion verdünnt.

Nach dem Neutralisieren mit Essigsäure wurde die Emulsion durch Zusatz von Ethanol gebrochen.

Das isolierte, wachsartige Polysiloxan, das noch in einem Toluol/Aceton-Gemisch löslich ist, kondensiert beim Stehenlassen an der Luft im Gegensatz zu einer reinen Mischung der beiden verwendeten verzweigten Ethoxygruppen enthaltenden Polysiloxane innerhalb weniger Stunden zu einem harzartigen Rückstand.

**Beispiel 7**

In ein Gemisch, bestehend aus 2,5 Gew.-Teilen oxethyliertem Nonylphenol, 0,4 Gew. -Teilen Tetrabutylammoniumhydrogensulfat und 3,5 Gew.-Teilen einer 2-molaren Natronlauge, wurde mittels einer Dissolverscheibe eine Mischung aus 15 Gew.-Teilen Dodecyltriethoxysilan und 25 Gew.-Teilen des verzweigten Methylpolysiloxans aus Beispiel 5 eingetragen und bis zur Bildung einer gelartigen, transparenten paste homogenisiert.

Die Paste wurde dam nach einer Verweilzeit von 2 Stunden bei 25°C unter Rühren mit 53,6 Gew.-Teilen Wasser zu einer feinteiligen, stabilen Emulsion verdünnt.

Nach dem Neutralisieren mit Essigsäure warde die Emulsion gebrochen.

Beim Stehenlassen an der Luft kondensierte das wachsartige Polysiloxan weiter. Der auskondensierte Rückstand war hart, aber nicht spröde und ausgesprochen hydrophob.

**Patentansprüche**

1. Verfahren zur Herstellung von feinteiligen, stabilen O/W-Emulsionen von Organopolysiloxanen durch Kondensation von niedrigmolekularen siliciumorganischen Verbindungen in feinteiliger Form in Gegenwart von Emulgatoren und Kondensationskatalysatoren, wobei man zunächst die zum Erhalt einer stabilen Emulsion benötigte Menge Emulgator in, bezogen auf das Gewicht des Emulgators, der 0,5- bis 3fachen Gewichtsmenge Wasser verteilt, dann in diese Verteilung die zu emulgierende Menge der siliciumorganischen Verbindung einträgt und unter Einwirkung hoher Scherkräfte bis zur Bildung einer gleichmäßigen, transparenten bis schwach opaken Paste homogenisiert, dadurch gekennzeichnet, daß man einen grenzflächenaktiven Katalysator in Mengen von 0,5 bis 5 Gew.-%, bezogen auf siliciumorganische Verbindungen, in einer der obengenannten Verfahrensstufen zusetzt, nach Erreichen des gewünschten Molekulargewichts die erhaltene Paste mit dem restlichen Wasser in an sich bekannter Weise scherkraftarm zu einer Emulsion verrührt und dann den Katalysator durch Neutralisieren desaktiviert.

2. Verfahren nach Anspruch 1, dadurch gekennzeichnet, daß man die transparente bis schwach opake Paste 30 Minuten bis 5 Stunden auf eine Temperatur von 20 bis 80°C erwärmt.

3. Verfahren nach Anspruch 1 oder 2, dadurch gekennzeichnet, daß man die Paste bis zum Erreichen des gewünschten Molekulargewichtes rührt.

4. Verfahren nach einem oder mehreren der Ansprüche 1 bis 3, dadurch gekennzeichnet, daß man bei Verwendung von Alkoxygruppen enthaltenden siliciumorganischen Ausgangsverbindungen den bei der Kondensation freiwerdenden Alkohol aus der Paste durch Temperaturerhöhung und/oder Druckverminderung entfernt.

5. Verfahren nach einem oder mehreren der vorhergehenden Ansprüche, dadurch gekennzeichnet, daß man zur Herstellung von 100 Gew.-Teilen Emulsion 1 bis 5 Gew.-Teile Emulgator in 0,5 bis 15 Gew.-Teilen Wasser verteilt, 20 bis 60 Gew.-Teile siliciumorganische Verbindungen einträgt und bis zur Bildung einer gleichmäßigen Paste homogenisiert und nach Erreichen des gewünschten Molekulargewichtes mit Wasser auf 100 Gew.-Teile verdünnt, wobei man 0,1 bis 3 Gew.-Teile Katalysator entweder in der zur Herstellung der Paste benötigten Menge Wasser oder in der gebildeten Paste verteilt und ihn nach Erreichen des gewünschten Molekulargewichtes neutralisiert.

6. Verfahren nach einem oder mehreren der vorhergehenden Ansprüche, dadurch gekennzeichnet, daß man als siliciumorganische Verbindungen Organopolysiloxanole. Organoalkoxysilane oder -siloxane mit 1 bis 4 Kohlenstoffatomen in der Alkoxygruppe oder cyclische Organopolysiloxane einzeln oder in Mischung verwendet.

7. Verfanren nach einem oder mehreren der vorhergehenden Ansprüche, dadurch gekennzeichnet, daß man als Katalysater eine starke, grenzflächenaktive organische Säure verwendet.

8. Verfahren nach Anspruch 7, dadurch gekennzeichnet, daß man als Katalysator eine Sulfonsäure, einen Schwefelsäurehalbester oder einen Phosphorsäurepartialester verwendet.

9. Verfahren nach einem oder mehreren der Ansprühe 1 bis 6, dadurch gekennzeichnet, daß man als Katalysator eine grenzflächenaktive organische Ammoniumbase verwendet.

## Claims

1. Process for preparing finely divided, stable O/W emulsions of organopolysiloxanes by condensation of low molecular weight organosilicon compounds in finely divided form in the presence of emulsifiers and condensation catalysts, where the amount of emulsifier needed to obtain a stable emulsion is first dispersed in, based on the weight of the emulsifier, from 0.5 to 3 times the amount by weight of water, the amount to be emulsified of the organosilicon compound is then introduced into this dispersion and the dispersion is homogenized under the action of high shear forces until a uniform, transparent to slightly opaque paste is formed, characterized in that a surface-active catalyst is added in amounts of from 0.5 to 5% by weight, based on organosilicon compounds, in one of the abovementioned process stages, after reaching the desired molecular weight the paste obtained is stirred with the remaining water in a manner known per se under low shear to give an emulsion and the catalyst is then deactivated by neutralization.

2. Process according to Claim 1, characterized in that the transparent to slightly opaque paste is heated to a temperature of from 20 to 80°C for from 30 minutes to 5 hours.

3. Process according to Claim 1 or 2, characterized in that the paste is stirred until the desired molecular weight is reached.

4. Process according to one or more of Claims 1 to 3, characterized in that when organosilicon starting compounds containing alkoxy groups are used, the alcohol liberated in the condensation is removed from the paste by increasing the temperature and/or reducing the pressure.

5. Process according to one or more of the preceding claims, characterized in that, to prepare 100 parts by weight of emulsion, from 1 to 5 parts by weight of emulsifier are dispersed in from 0.5 to 15 parts by weight of water, from 20 to 60 parts by weight of organosilicon compounds are introduced and the mixture is homogenized until a uniform paste is formed and, after reaching the desired molecular weight, is diluted with water to 100 parts by weight, where from 0.1 to 3 parts by weight of catalyst are either dispersed in the amount of water needed for the preparation of the paste or in the paste formed and are neutralized after the desired molecular weight is reached.

6. Process according to one or more of the preceding claims, characterized in that the organosilicon compounds used are organopolysiloxanols, organoalkoxysilanes or organoalkoxysiloxanes having from 1 to 4 carbon atoms in the alkoxy group or cyclic organopolysiloxanes, individually or in admixture.

7. Process according to one or more of the preceding claims, characterized in that the catalyst used is a strong, surface-active organic acid.

8. Process according to Claim 7, characterized in that the catalyst used is a sulphonic acid, a monoester of sulphuric acid or a partial ester of phosphoric acid.

9. Process according to one or more of Claims 1 to 6, characterized in that the catalyst used is a surface-active organic ammonium base.

## Revendications

1. Procédé pour la préparation d'émulsions huile/eau stables à particules fines de polyorganosiloxanes, par condensation et/ou polymérisation de composés organiques de silicium à faible masse moléculaire sous forme finement divisée, en présence d'agents émulsionnants et de catalyseurs de condensation et/ou de polymérisation, où l'on disperse d'abord, dans 0,5 à 3 fois la quantité d'eau, par rapport au poids de l'agent émulsionnant, la quantité d'agent émulsionnant nécessaire à l'obtention d'une émulsion stable, puis on introduit dans cette dispersion la quantité à émulsionner du composé organique du silicium et, sous l'action de forces élevées de cisaillement, on homogénéise jusqu'à la formation d'une pâte homogène, transparente à faiblement opaque, caractérisé en ce que l'on ajoute un catalyseur tensio-actif en des quantités de 0,5 à 5 % en poids, par rapport au composé organique du silicium, dans l'une des étapes de procédé ci-dessus mentionnées ;

après avoir atteint la masse moléculaire souhaitée, on mélange la pâte obtenue à l'eau résiduelle, sous une faible force de cisaillement, d'une manière connue en soi, et ensuite on désactive par neutralisation le catalyseur.

2. Procédé selon la revendication 1, caractérisé en ce qu'on chauffe pendant 30 minutes à 5 heures à une température

de 20 à 80°C la pâte transparente à faiblement opaque.

3. Procédé selon la revendication 1 ou 2, caractérisé en ce qu'on agite la pâte jusqu'à obtention de la masse moléculaire souhaitée.

4. Procédé selon l'une ou plusieurs des revendications 1 à 3, caractérisé en ce que, quand on utilise comme composés de départ des composés organiques du silicium contenant des groupes alcoxy, on élimine de la pâte, par élévation de la température et/ou diminution de la pression, l'alcool qui se libère lors de la condenstion.

5. Procédé selon l'une ou plusieurs des revendications précédentes, caractérisé en ce que, pour préparer 100 parties en poids d'émulsion, on dispserse 1 à 5 parties en poids d'agent émulsionnant dans 0,5 à 15 parties en poids d'eau, on introduit 20 à 60 parties en poids de composés organiques du silicium et on homogénéise jusqu'à la formation d'une pâte homogène et, après avoir atteint la masse moléculaire souhaitée, on dilue à l'eau à 100 parties en poids, ce à l'occasion de quoi on disperse 0,1 à 3 parties en poids de catalyseur soit dans la quantité d'eau nécessaire à la préparation de la pâte, soit dans la pâte formée, et on le neutralise après que l 'on a atteint la masse moléculaire souhaitée

6. Procédé selon l'une ou plusieurs des revendications précédentes, caractérisé en ce qu'on utilise comme composés organiques du silicium, seuls ou en mélange, des polyorganosiloxanols, des organoalcoxysilanes ou -siloxanes ayant de 1 à 4 atomes de carbone dans le groupe alcoxy, ou des polyorganosiloxanes cycliques.

7. Procédé selon l'une ou plusieurs des revendications précédentes, caractérisé en ce qu'on utilise comme catalyseur un acide organique fort tensioactif.

8. Procédé selon la revendication 7, caractérisé en ce qu'on utilise comme catalyseur un acide sulfonique, un semiester de l'acide sulfurique ou un ester partiel de l'acide phosphorique.

9. Procédé selon l'une ou plusieurs des revendications 1 à 6, caractérisé en ce qu'on utilise comme catalyseur une base organique tensioactive qui est un composé ammonium.